# EUROPÄISCHE PATENTANMELDUNG

(11) **EP 1 366 649 A1**
(43) Veröffentlichungstag der Anmeldung: **03.12.2003**
(21) Anmeldenummer: 02006957.1
(22) Anmeldetag: 21.03.2002
(51) Int. Cl.: A01B 45/02, E01C 13/08

(54) **Slim-Drainbond-Drainage-Verlegeeinrichtung**

(71) Anmelder: Sommerfeld, Erwin, 26188 Friedrichshafen (DE); Sommerfeld, Frank, 26188 Friedrichshafen (DE)
(72) Erfinder: Sommerfeld, Erwin, 26188 Friedrichshafen (DE); Sommerfeld, Frank, 26188 Friedrichshafen (DE)

(57) **Zusammenfassung**

Dieses Verfahren ermöglicht das Verlegen eines Drainrohres in einem extrem schmalen Schlitz (10) gegenüber zu herkömmlichen Verlegungsverfahren. Der Vorteil besteht in einem äußerst schonenden Einbringen des Drainrohres (Filterband "Slim-Drainbond") (1) ohne großes Aufbrechen oder Aufwerfen des Grasbodens. Dies ist insbesondere auf Grasböden in Golf-, Sport- und Parkanlagen usw. erforderlich. Durch die besonders schmale Verlege-Einrichtung und durch die Art des Verlegungs-Systems, bedingt durch das extrem flache schmale Filterband "Slim-Drainbond" (1), wird dies ermöglicht.

Das Verfahren betrifft eine extrem schmale "Slim-Drainbond-Drainage-Verlegeeinrichtung" sowie auch in Verbindung mit einem Combigerät (z.B. Bodenauflockerer) für eine spezielle Art und Anordnung der Verlegung eines Filterbandes "Slim-Drainbond" (1) mit einem besonderen speziellen Querschnitt, schmal in der X-Achse und im Verhältnis extrem hoch in der Y-Achse für die aufzunehmende Wassermenge, also hochkant, d.h. senkrecht angeordnet.

Weiterhin ergibt dieses neuartige System zwangsläufig durch die dabei entstehenden, um ein vielfaches geringeren, Schnitt- bzw. Aufreißkräfte dieser neuen Verlege-Maschine eine geringere Zugkraft gegenüber herkömmlichen Verlegungs-Maschinen mit ihren verhältnismäßig breiten Verlegeschächten. Dies ermöglicht somit eine gleichzeitige Verlegung mehrerer Drainstränge (1) in einem Arbeitsgang und führt so zu einer erheblichen Kostenreduzierung.

## Beschreibung

Mit der Erfindung soll ein Verfahren durchgeführt werden, so dass das Verlegen in einem schmalen Schlitz ohne ein Aufbrechen oder Aufwerfen des Grasbodens äußerst schonend ein Filterband "Slim-Drainbond", hochkant in einer vorgegebenen Neigung zur Erd- bzw. Rasenoberfläche, eingebracht werden kann. Dies ist insbesondere auf Grasböden in Golf-, Sportund Parkanlagen usw. erforderlich. Durch die besonders schmale Verlegeeinrichtung und durch die Art des Verlegungssystems, bedingt durch das extrem flache schmale Filterband "Slim-Drainbond", wird dies überhaupt erst ermöglicht.

Das Verfahren betrifft eine extrem schmale "Slim-Drainbond-Drainage-Verlegeeinrichtung" sowie auch in Verbindung mit einem Combigerät (z.B. Bodenauflockerer) für eine spezielle Art und Anordnung der Verlegung eines Filterbandes "Slim-Drainbond" mit einem besonderen Querschnitt, schmal in der X-Achse und im Verhältnis extrem hoch, für die aufzunehmende Wassermenge in der Y-Achse, also hochkant, d.h. senkrecht angeordnet.

### Bezugszeichenliste:

1) Drainageband
2) Sand- bzw. Kiesumhüllung
3) pulsierender Verlegeschacht
4) Sand- bzw. Kieszuführung
5) Vorschneider fest verbunden mit dem Verlegeschacht
6) Drainagebandhaspel
7) Sand- bzw. Kiesbehälter
8) Walze
9) pulsierender Bodenauflockerer
10) Erdschlitz
11) Zugmaschine

## Patentansprüche

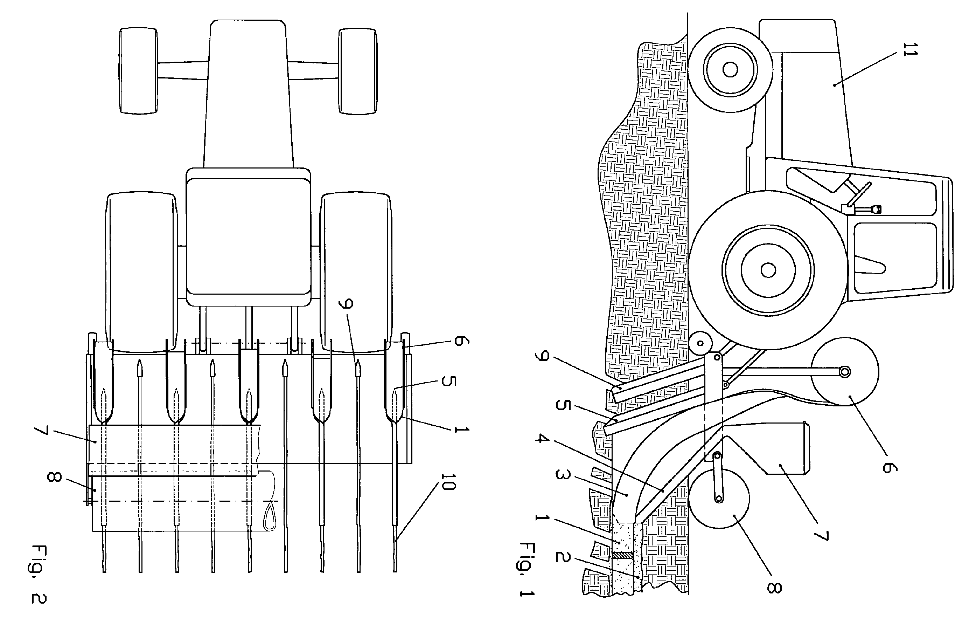

1. Verfahren Fig. 1 und Fig. 2, **dadurch gekennzeichnet, dass** die Form ein extrem schmales Rechteck ist und hochkant unter einer vorgegebenen Neigung oder bei großen Gefällstrecken nach der Erdoberfläche mit einer rechnerischen mittleren Neigung bzw. mit Brechpunkten verlegt wird.

2. nach Anspruch 1, **dadurch gekennzeichnet, dass** durch die spezielle Art und durch die Hochkant-Anordnung des Drainstranges und den dadurch möglichen extrem schmalen Schlitz eine schonende Verlegung im Erdreich erreicht wird.

3. nach Anspruch 1, extrem schmale "Slim-Drainbond-Drainage-Verlegeeinrichtung" sowie als auch in Verbindung mit einem Combigerät.

4. nach Anspruch 1, **dadurch gekennzeichnet, dass** ein gleichzeitiges Verlegen von mehreren "Slim-Drainbond-Strängen" in einem Arbeitsgang, je nach Bodenbeschaffung - durch die dabei geringeren Zugkräfte, die gegenüber herkömmlichen verhältnismäßig breiten Verlegeschächten auftreten - überhaupt erfolgen kann.
